# EUROPÄISCHE PATENTSCHRIFT

(11) **EP 0 798 543 B1**
(45) Veröffentlichungstag und Bekanntmachung des Hinweises auf die Patenterteilung: **28.04.1999**
(21) Anmeldenummer: 97102478.1
(22) Anmeldetag: 15.02.1997
(51) Int. Cl.: G01D 13/22, G12B 11/04

(54) **Zweiteiliger transparenter Zeiger**
Two-part transparent pointer
Aiguille transparente en deux parties

(30) Priorität: 29.03.1996 DE 19612492
(43) Veröffentlichungstag der Anmeldung: 01.10.1997
(73) Patentinhaber: Valeo Electronics Verwaltung GmbH, 75189 Remchingen (DE)
(72) Erfinder: Barth, Manfred, 75323 Bad Wildbad (DE); Renken, Toni, 75196 Remchingen (DE)
(74) Vertreter: COHAUSZ HANNIG DAWIDOWICZ & PARTNER

(56) Entgegenhaltungen:
- EP-A- 0 551 222
- DE-A- 3 343 861
- DE-A- 3 425 029

## Beschreibung

Die Erfindung betrifft einen Zeiger aus transparentem Material, der um eine Zeigerachse drehbar gelagert ist und in den Licht von der dem Betrachter abgewandten Seite etwa parallel zur Zeigerachse einleitbar ist, wobei der Zeiger eine zur Zeigerachse senkrecht angeordnete Zeigerfahne hat und wobei mindestens eine in den Zeiger eigebrachte Ausnehmung Reflexionsflächen bildet, die das Licht zur Spitze und zum Ende der Zeigerfahne umlenken, wobei die Zeigerfahne als separates Bauteil auf der dem Betrachter zugewandten Seite eines Grundkörpers befestigbar ist.

Derart ausgeleuchtete Zeiger werden bevorzugt in Instrumenten von Kraftfahrzeugen eingesetzt, da sie ohne den Fahrer zu blenden, bei Dunkelheit gut zu erkennen sind. Probleme bei allen bekannten Zeigereinrichtungen ergeben sich jedoch hinsichtlich einer möglichst homogenen Ausleuchtung der Zeigerfahne.

Aus der DE 33 43 861 A1 ist ein Zeiger bekannt, bei dem das Licht über zwei zur Zeigerachse parallele neben der Zeigerfahne angeordnete Lichtleiter in den Zeiger eingekoppelt und durch im Zeiger angeordnete Reflexionsflächen in Richtung der Zeigerspitze und des Zeigerendes abgelenkt wird. Zwar wird durch die seitliche Einkopplung des Lichtes eine Spotbildung auf der Zeigerfahne vermieden, die Konstruktion ist jedoch aufwendig und kann eine homogene Ausleuchtung nicht garantieren.

Eine ähnlich aufwendig zu montierende Zeigereinrichtung ist auch aus der DE 34 25 029 A1 bekannt, wo versucht wird, die homogene Ausleuchtung durch Abdecken der Einkoppelstellen oder durch die besondere Anordnung der Reflexionsflächen zu erreichen. Die Einkopplung von Licht in einen Zeigerfuß ist auch aus der EP 551 222 A1 bekannt.

Aus DE 33 47 014 ist eine Zeigereinrichtung mit einem Zeiger der genannten Art bekannt, in den eine streuende Abdeckung eingebracht ist, welche die Reflexionsflächen zum Betrachter hin abdeckt, und die Bildung von auffälligen Lichtspots auf der Oberfläche des Zeigers verhindert.

Nachteilig an diesem Zeiger ist, daß die Abdeckung ein winziges separates Bauteil darstellt, das beim Zusammenbau in einen dafür vorgesehenen Schlitz im Zeiger eingeschoben werden muß. Gegen Herausfallen ist die Abdeckung dadurch gesichert, daß sie durch ihre Größe eigenständig klemmt. In einer anderen Ausführungsform ist die Abdeckung mit einer über den Fuß des Zeigers zu montierenden Kappe gegen Herausfallen gesichert.

Bei dem genannten Zeiger ist es zudem nachteilig, daß die Möglichkeit der Orientierung der Reflexionsflächen vom Herstellungsprozeß des Zeigers insbesondere durch den Gießvorgang beschränkt ist. So ist das Einbringen von Reflexionsflächen, die nicht die gesamte Breite des Zeigers einnehmen, sondern nur auf einen kleinen Bereich in der Mitte beschränkt sind fast unmöglich.

Aufgabe der Erfindung ist es, einen Zeiger zu schaffen, der bei individueller Gestaltung der Reflexionsflächen eine komfortable Montage sämtlicher Bauteile erlaubt.

Die Aufgabe wird erfindungsgemäß durch einen Zeiger nach Anspruch 1 gelöst.

Vorteilhafte Ausführungsformen des erfindungsgemäßen zweiteiligen Zeigers sind in den abhängigen Ansprüchen aufgeführt.

Wesentlicher Vorteil des erfindungsgemäßen Zeigers ist, daß die komplizierte Montage einer separaten Abdeckung insbesondere eines kleinen Abdeckplättchens entfällt. Bei der Montage des erfindungsgemäßen Zeigers wird einfach die Zeigerfahne auf die Grundplatte gesetzt. Dabei kommt die streuende Struktur sicher in die vorgesehene Position.

Die streuende Struktur wird vorteilhafterweise durch Aufrauhen einer Oberfläche insbesondere der vom Betrachter abgewandten Fläche der Zeigerfahne, welche die in den Grundkörper eingebrachten Reflexionsflächen bedeckt, realisiert. Diese Oberflächenrauhigkeit kann entweder bei der Fertigung der Zeigerfahne durch eine entsprechende Rauhigkeit der Negativform erreicht werden oder durch nachträgliches Aufrauhen der Oberfläche entstehen. Besonders vorteilhaft ist, daß jede beliebige der zwischen der Zeigerfahne und dem Grundkörper vorhandenen Flächen aufgeraut werden kann.

Durch die Teilung des Zeigers in einen Grundkörper und eine Zeigerfahne wird eine individuelle Ausgestaltung der Reflexionsflächen im Zeiger möglich. So können die gut zugänglichen Oberflächen insbesondere die dem Betrachter zugewandte Oberfläche des Grundkörpers beliebig durch das Einbringen von Ausnehmungen gestaltet werden, bevor dieser mit der Zeigerfahne überdeckt wird. Insbesondere ist das Einbringen von Ausnehmungen möglich, deren Kanten nicht die gesamte Breite sondern lediglich einen kleinen Teil um die Mitte herum einnehmen. Die Oberflächen des Grundkörpers kommen nach dem Zusammenbau im Inneren des Zeigers zu liegen und verteilen als über der Nabe liegende Reflexionsflächen das entlang der Zeigerwelle eintretende Licht. Der Grundkörper weist somit alle nötigen Ein-, Aus- und Umlenkflächen auf.

Durch die beliebig einstellbaren Reflexionsflächen wird somit einerseits eine optimale Ausleuchtung des Zeigers bewirkt, während durch eine angepaßte Aufrauhung der Flächen zwischen dem Grundkörper und der Zeigerfahne eine besonders homogene Verteilung der Lichtintensität erreicht wird.

In einer besonderen Ausführungsform sind die aufgerauhten Flächen mit einer transparenten farbigen Schicht belegt. Damit kann die Homogenisierung der Intensität des Lichtes eines auf der Zeigeroberfläche mit einer farbigen Schicht überzogenen Zeigers verbessert werden. Es ist darüber hinaus möglich, dem Zeiger ein individuelles Farbdesign zu verschaffen.

Um die seitlich abstehenden Teile des Grundkörpers und die Bereiche der Zeigerfahne, die von der eigentlichen Zeigernadel seitlich abstehen vor dem Auge des Betrachters zu verbergen ist es vorteilhaft, diese mit einer lichtundurchlässigen Kappe zu bedecken. Diese Kappe wird nach dem Zusammensetzen von Grundkörper und Zeigerfahne aufgesetzt und warm verformt. Sie kann auch dazu dienen, Grundkörper und Zeigerfahne dauerhaft zu verbinden.

Ein Ausführungsbeispiel des erfindungsgemäßen Zeigers ist in den Zeichnungen dargestellt und wird im folgenden näher beschrieben.

Es zeigen:
- **Figur 1**: einen Grundkörper,
- **Figur 2**: eine Zeigerfahne,
- **Figur 3**: die Unterseite einer Zeigerfahne,
- **Figur 4**: den Zusammenbau von Grundkörper und Zeigerfahne,
- **Figur 5**: einen Zeiger,
- **Figur 6**: die Lichtleitung in einer Zeigerfahne.

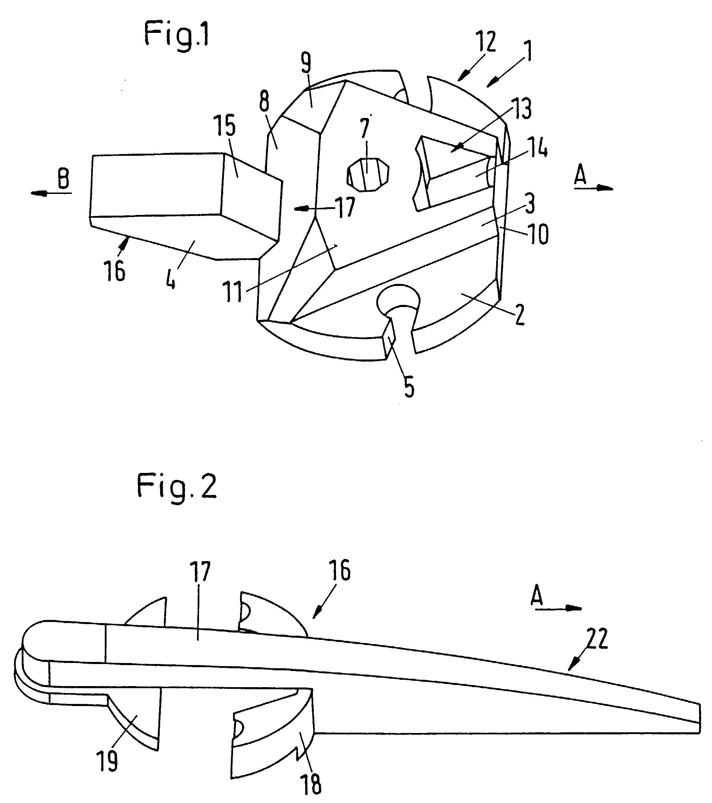

Figur 1 zeigt den aus transparentem Kunststoff gespritzten Grundkörper 1 eines Zeigers. Auf eine Basisplatte 2 des Grundkörpers 1 sind zwei die Reflexionsflächen tragende Streukörper 3 und 4 angeformt. In die Basisplatte 2 sind Nuten 5 eingebracht, die am inneren Ende zu Bohrungen ausgeformt sind und nicht dargestellte Federn aufnehmen, die in eine später zu beschreibende Kappe 6 angebracht sind und diese am Grundkörper 1 fixieren. In das Zentrum des Grundkörpers 1 eine Bohrung 7 eingebracht, die als Nabe des Zeigers dient und in welche die Zeigerwelle einsteckbar ist.

Der Streukörper 3 hat Reflexionsflächen 8 und 9, die das von einer unterhalb der Basisplatte 2 angeordneten Lichtquelle kommende in die Eintrittsfläche 12 eintretende Licht in Richtung Zeigerspitze A durch eine Austrittsfläche 10 reflektieren. Die Reflexionsfläche 8 vermeidet auch, daß Licht nach oben austreten kann. Die Reflexion ist eine Totalreflexion eines Teiles des durch den transparenten Kunststoff gehenden Lichtes. Ein anderer Teil der Intensität tritt durch die Reflexionsflächen nach oben aus.

In die Deckfläche 11 des Grundkörpers ist eine prismatische Ausnehmung 13 eingebracht, die eine Reflexionsfläche 14 ausbildet. Die Reflexionsfläche 14 dient dazu, das Licht, das von der unterhalb der Basisplatte 2 angeordneten Lichtquelle in die Eintrittsfläche 12 eintritt, in Richtung Zeigerspitze A durch eine Austrittsfläch 10 zu reflektieren.

Der auf der Basisplatte 2 angebrachte Streukörper 4 hat eine Reflexionsfläche 15, die das Licht in Richtung B zum Zeigerende reflektiert und eine Reflexionsfläche 16, die das in Richtung B gestreute Licht nach oben ablenkt. Durch die Anordnung der Streukörper 3 und 4 wird eine dreieckige prismenförmige Ausnehmung 17 gebildet.

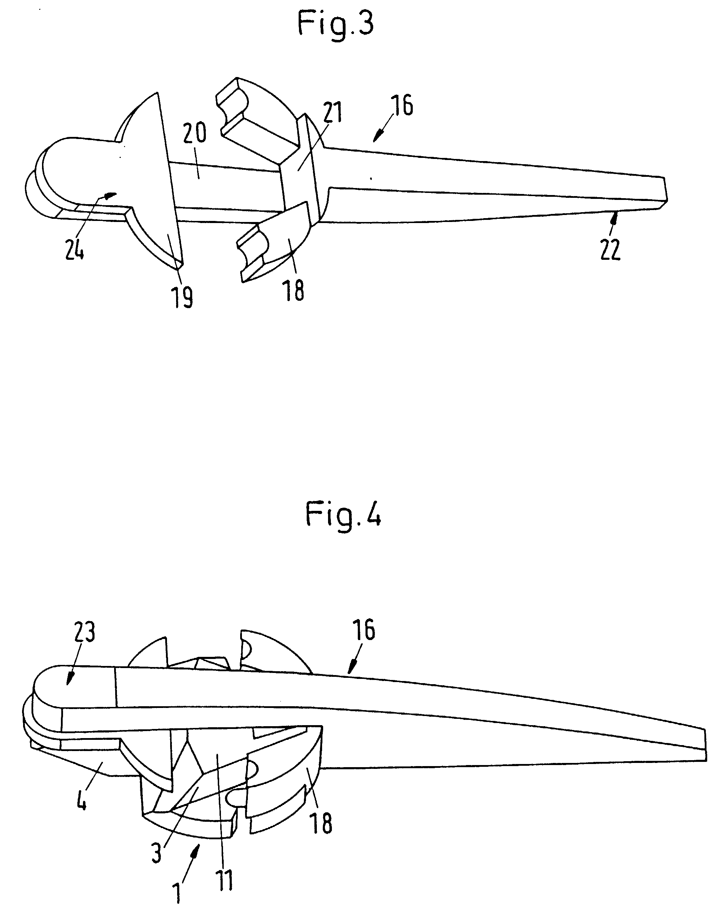

In einer besonderen Ausführungsform des Grundkörpers 1 wird durch Aufrauhen der Deckfläche 11 eine Struktur geschaffen, die das durchtretende Licht aufstreut und dazu beiträgt eine Spotbildung auf der sichtbaren Oberfläche 17 der in Figur 2 gezeigten Zeigerfahne 16 zu vermeiden. Die Zeigerfahne 16 wird wie in Figur 4 dargestellt auf den Grundkörper 1 aufgesetzt. Um einen sicheren Halt auf dem Grundkörper 1 zu erreichen, sind an die Zeigerfahne 16 zwei seitlich abstehende Halteteile 18 angeformt, die bei aufgesetzter Zeigerfahne 16 den Streukörper 3 in Drehrichtung formschlüssig umgreifen. Um der Kappe 6 ausreichenden Halt zu verschaffen ist an der Zeigerfahne 16 eine Auflage 19 angeformt.

In Figur 3 ist eine Ansicht auf die Unterseite der Zeigerfahne 16 gezeigt. Dabei ist die Abdeckfläche 20 zu erkennen, die in zusammengesetzten Zustand einen Teil der Deckfläche 11 des Grundkörpers 1 bedeckt. Die Abdeckfläche 20 ist aufgerauht, so daß eine streuende Struktur entsteht, die eine Spotbildung auf der dem Betrachter zugewandten Oberfläche 17 verhindert. Die plane Eintrittsfläche 21 kommt mit der Austrittsfläche 10 zur Anlage. Durch die Eintrittsfläche 21 tritt das in die Zeigerspitze 22 gestreute Licht. Die nach unten gerichtete Eintrittsfläche 24 der Auflage 19 kann ebenfalls aufgerauht sein. Die Oberfläche 17 der Zeigerfahne ist mit einer transparenten farbigen Schicht versehen.

In Figur 4 ist der Zusammenbau von Grundkörper 1 und Zeigerfahne 16 dargestellt. Deutlich zu erkennen ist, wie die Halteteile 18 den Streukörper 3 umgreifen. Die Oberflächen der Helteteile 18 bilden mit der Austrittsfläche 11 eine Ebene. Das Ende 23 der Zeigerfahne 16 kommt auf die Austrittsfläche des Streukörpers 4 zu liegen.

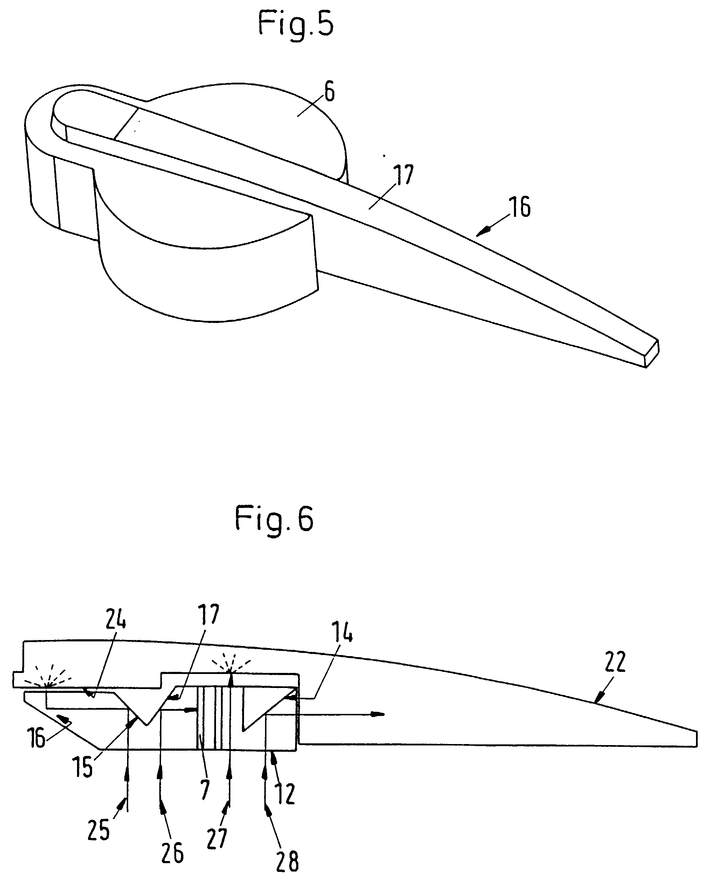

Nach dem Zusammenbau von Grundkörper 1 und Zeigerfahne 16 werden die seitlich abstehenden Teile von einer Kappe 6 aus lichtundurchlässigem Kunststoff bedeckt (Figur 5). Die Kappe 6 wird mit nicht dargestellten Federn in die Nuten 5 des Grundkörpers eingerastet. Für den Betrachter ist nach Aufsetzen der Kappe lediglich die Oberfläche 17 des Zeigers 16 zu sehen, die bei Dunkelheit homogen erleuchtet ist.

In Figur 6 ist die Verteilung des Lichtes dargestellt, das von einer Lichtquelle kommt, die auf der dem Betrachter abgewandten Unterseite des Grundkörpers durch die Eintrittsfläche 12 eintritt.

Ein Lichtstrahl 25 wird an der Reflexionsfläche 15 nach hinten umgelenkt und trifft auf Reflexionsfläche 16, die ihn nach oben spiegelt. Lichtstrahl 25 tritt durch die Eintrittsfläche 24 und wird von der streuenden Struktur aufgestreut.

Ein Lichtstrahl 26 wird an der Reflexionsfläche 17 nach vorne umgelenkt und wird entweder von der Nabe 7 absorbiert oder an dieser vorbei Richtung Zeigerspitze 22 reflektiert.

Ein Lichtstrahl 27 tritt direkt durch die Deckfläche des Grundkörpers 1 in die Zeigerfahne 16 und wird von der streuenden Struktur der Abdeckfläche 20 aufgestreut.

Ein Lichtstrahl 28 wird an der Reflexionsfläche 14 nach vorne in Richtung Zeigerspitze 22 reflektiert.

## Patentansprüche

1. Zeiger aus transparentem Material, der um eine Zeigerachse drehbar gelagert ist und in den Licht von der dem Betrachter abgewandten Seite etwa parallel zur Zeigerachse einleitbar ist, wobei der Zeiger eine zur Zeigerachse senkrecht angeordnete Zeigerfahne (16) hat und wobei mindestens eine in den Zeiger eigebrachte Ausnehmung Reflexionsflächen (14,15,17) bildet, die das Licht zur Spitze (22) und zum Ende (23) der Zeigerfahne (16) umlenken, wobei die Zeigerfahne (16) als separates Bauteil auf der dem Betrachter zugewandten Seite eines Grundkörpers (1) befestigbar ist,
**dadurch gekennzeichnet,**
- daß die Ausnehmung(en) (13,17) in den Grundkörper (1) eingebracht ist (sind),
- daß die Zeigerfahne (16) die Ausnehmung(en) (13,17) mit einer Abdeckfläche (20) überdeckt und
- daß die Abdeckfläche (20) auf der dem Betrachter abgewandten Seite eine lichtstreuende Struktur aufweist.

2. Zeiger nach Anspruch 1,
**dadurch gekennzeichnet,** daß die lichtstreuende Struktur eine gleichmäßige Aufrauhung der Abdeckfläche (20) ist.

3. Zeiger nach Anspruch 1 oder 2,
**dadurch gekennzeichnet,** daß der Grundkörper (1) auf der/den dem Betrachter zugewandten Fläche(n) (11) lichtstreuende Strukturen aufweist.

4. Zeiger nach einem der vorherigen Ansprüche,
**dadurch gekennzeichnet**, daß die lichtstreuende Strukturen mit einer transparenten farbigen Schicht belegt sind.

5. Zeiger nach einem der vorherigen Ansprüche,
**dadurch gekennzeichnet**, daß auf die dem Betrachter zugewandten Oberfläche (17) der Zeigerfahne (16) eine farbige Schicht aufgebracht ist.

6. Zeiger nach einem der vorherigen Ansprüche,
**dadurch gekennzeichnet,** daß die nicht von der Zeigerfahne (16) überdeckten Flächen des Grundkörpers (1) von einer Kappe (6) aus undurchsichtigem Material bedeckt sind.

## Claims

1. A pointer made from transparent material, which is pivoted about a pointer axis and can be introduced into the light from the side faced away from the observer roughly parallel to the pointer axis, with the pointer having a pointer lug (16) disposed perpendicular to the pointer axis and at least one recess made in the pointer forming reflection faces (14, 15, 17) which deflect the light to the point (22) and to the end (23) of the pointer lug (16),
with the pointer lug (16) being attached as a separate component to the side of a basic element (1) faced towards the observer,
**characterised in that**
- the recess(es) (13, 17) is (are) provided in the basic element (1),
- the pointer lug (16) covers the recess(es) (13,17) with a cover face (20) and
- the cover face (20) comprises a light-scattering structure on the side faced away from the observer.

2. A pointer according to Claim 1,
**characerised in that** the light-scattering structure is a uniform roughening of the cover face (20).

3. A pointer according to Claim 1 to 2,
**characterised in that** the basic element (1) comprises light-scattering structures on the face(s) faced towards the observer.

4. A pointer according to one of the preceding Claims,
**characterised in that** the light-scattering structures are covered with a transparent colored coating.

5. A pointer according to one of the preceding Claims,
**charcterised in that** a coloured coating is applied to the surface (17) of the pointer lug (16) faced towards the observer.

6. A pointer according to one of the preceding Claims,
**characterised in that** the faces of the basic element (1) not covered by the pointer lug (16) are covered by a cap (6) made of opaque material.

## Revendications

1. Aiguille indicatrice en matière transparente montée mobile autour d'un axe de l'aiguille, dans laquelle de la lumière peut être introduite, à partir de la face opposée à l'observateur, à peu près parallèlement à l'axe de l'aiguille, l'aiguille indicatrice comportant un panneau indicateur (16) disposé perpendiculairement à l'axe de l'aiguille et au moins un évidement aménagé dans l'aiguille indicatrice formant des faces réflectrices (14, 15, 17) qui dévient la lumière vers la pointe (22) et vers l'extrémité (23) du panneau indicateur (16), dans laquelle le panneau indicateur (16) peut être fixé en tant que composant séparé sur la face dirigée vers l'observateur d'un corps de base (1), caractérisée en ce que
- le (ou les) évidement(s) (13, 17) est (sont) aménagé(s) dans le corps de base (1),
- le panneau indicateur (16) recouvre le (ou les) évidement(s) (13, 17) au moyen d'une face de recouvrement (20) et
- la face de recouvrement (20) comporte, sur son côté opposé à l'observateur, une structure diffusant la lumière.

2. Aiguille indicatrice selon la revendication 1, caractérisée en ce que la structure diffusant la lumière est constituée par un traitement réalisant une rugosité régulière de la face de recouvrement (20).

3. Aiguille indicatrice selon la revendication 1 ou 2, caractérisée en ce que le corps de base (1) comporte des structures (11) diffusant la lumière sur la (ou les) surface(s) dirigée(s) vers l'observateur.

4. Aiguille indicatrice selon l'une quelconque des revendications précédentes, caractérisé en ce que les structures diffusant la lumière sont enduites d'une couche colorée transparente.

5. Aiguille indicatrice selon l'une quelconque des revendications précédentes, caractérisé en ce qu'une couche colorée est appliquée sur la surface (17) du panneau indicateur (16) qui est dirigée vers l'observateur.

6. Aiguille indicatrice selon l'une quelconque des revendications précédentes, caractérisé en ce que les surfaces du corps de base (1), non recouvertes par le panneau indicateur (16), sont recouvertes par un capot (6) en matière non transparente.
